# EUROPÄISCHE PATENTSCHRIFT

(11) **EP 2 534 346 B1**
(45) Veröffentlichungstag und Bekanntmachung des Hinweises auf die Patenterteilung: **08.10.2014**
(21) Anmeldenummer: 11700724.5
(22) Anmeldetag: 11.01.2011
(51) Int. Cl.: F01N 3/34, F01N 13/10, F01N 3/30

(54) **ABGASKRÜMMER FÜR EINE VERBRENNUNGSKRAFTMASCHINE**
EXHAUST MANIFOLD FOR AN INTERNAL COMBUSTION ENGINE
COLLECTEUR D'ÉCHAPPEMENT POUR MOTEUR À COMBUSTION INTERNE

(30) Priorität: 13.02.2010 DE 102010007877
(43) Veröffentlichungstag der Anmeldung: 19.12.2012
(73) Patentinhaber: Bayerische Motoren Werke Aktiengesellschaft, 80809 München (DE)
(72) Erfinder: KOCH, Günter, 86199 Augsburg (DE)
(86) Internationale Anmeldenummer: PCT/EP2011/000076
(87) Internationale Veröffentlichungsnummer: WO 2011/098200

(56) Entgegenhaltungen:
- EP-A1- 0 715 064
- EP-A1- 0 719 915
- DE-A1- 4 315 086
- DE-U1- 8 914 153

## Beschreibung

Die Erfindung betrifft einen Abgaskrümmer für eine Verbrennungskraft-maschine.

Es ist oft erwünscht, einem Abgassystem der Verbrennungskraftmaschine Sekundärluft zuzuführen, wozu eine Fluideinleitung in die Abgasrohre der Verbrennungskraftmaschine erforderlich ist. Aufgrund der hohen Temperaturunterschiede, die zwischen den einzelnen Bauteilen, insbesondere dem Motorblock und den Abgasrohren, herrschen, ist es technisch aufwendig, eine dichte und langlebige Verbindung zu schaffen.

Ein oben beschriebener Abgaskrümmer ist beispielsweise aus der DE 43 15 086 A1 bekannt. Bei dem dort gezeigten Abgaskrümmer wird die Sekundärluft über den Motorblock in den Flansch und von dort in die Abgasrohre eingeleitet. Zu diesem Zweck müssen zwischen Motorblock und Flansch entsprechende Strömungsverbindungen geschaffen werden. Diese Vorgehensweise ist technisch aufwendig und damit kostenintensiv.

EP 0 719 915 A1 zeigt einen Abgaskrümmer mit einem von einer zweiten Wand umgebenen Abgasrohr. Die zweite Wand ist mit dem Abgasrohr stromabwärts eines Kanals zur Lufteinspeisung zusammengeführt.

In der EP 0 715 064 A1 ist ein Abgaskrümmer dargestellt, bei dem ein Kanal zum Anschluss einer Lambdasonde vorgesehen ist, der in einem auf den Flansch aufgesetzten Blechtiefziehteil ausgebildet ist.

Die DE 8914153 U1 zeigt einen Abgaskrümmer, bei dem der Flansch aus einzelnen Platten zusammengesetzt ist, von denen einige einen Kanal durch in den Platten vorgesehene Aussparungen bilden.

Aufgabe der Erfindung ist es, eine kostengünstige Alternative zur Fluideinleitung in das Abgassystem vorzustellen.

Hierzu sind erfindungsgemäß bei einem Abgaskrümmer der eingangs genannten Art die Merkmale des Anspruchs 1 vorgesehen.

Auf diese Weise sind keine Verbindungen vom Kanal zum Inneren des Motorblocks mehr erforderlich. Der Flansch kann also mit Ausnahme der Durchführungen der Abgasrohre motorblockseitig geschlossen ausgeführt werden. Sowohl die Einleitung von Fluid, beispielsweise Sekundärluft, in den Kanal als auch die Einleitung des Fluids aus dem Kanal in

das oder die Abgasrohre erfolgt auf der dem Motorblock abgewandten Seite des Flansches.

Die Abgasrohre sind von einer Außenschale einer Luftspaltisolierung umgeben, wie es bei einem bekannten LSI-Krümmer der Fall ist, wobei das den Kanal bildende Blechbauteil innerhalb der Außenschale angeordnet ist.

Der Kanal kann unmittelbar mit dem Inneren der Abgasrohre in Strömungsverbindung stehen. Alternativ hierzu wäre es denkbar, dass das Fluid zuerst in den Luftspalt des LSI-Krümmers und danach in die Abgasrohre strömt.

In einer bevorzugten Ausführungsform der Erfindung erstreckt sich der Kanal entlang einer Flanschfläche, die entgegengesetzt zu derjenigen Flanschfläche liegt, welche am Motorblock anliegt. Das Blechbauteil ist vorzugsweise ein separates zweites Teil, das mit dem Flansch verbunden ist, zum Beispiel durch Schweißen. Da der Flansch am Motorblock anliegt, also beispielsweise am gekühlten Zylinderkopf, sind die dort im Betrieb auftretenden Temperaturunterschiede deutlich geringer als im Bereich der Abgasrohre. Aus diesem Grund ist eine Verbindung des Blechbauteils mit dem Flansch weniger starken Temperaturschwankungen unterworfen und unterliegt somit weniger starken unterschiedlichen thermischen Ausdehnungen. Auf die Verwendung eines sonst üblichen Ausgleichselements zwischen den einzelnen Bauteilen kann daher verzichtet werden.

Das den Kanal bildende Blechbauteil hat vorzugsweise ein im Wesentlichen U-förmiges Querschnittsprofil, wobei die Schenkel des Profils zur Flanschfläche gerichtet sind. Das Volumen des Kanals kann auf einfache Weise über die Länge der Schenkel und die Breite des vorzugweise ebenen Verbindungsstegs zwischen diesen festgelegt werden, wobei auch ein relativ großes Volumen bei geringem Platzbedarf realisiert werden kann.

Das den Kanal bildende Blechbauteil weist vorzugsweise einen Ansatz zum Anschluss an die Fluidleitung auf, beispielsweise in Form eines angeformten Stutzens.

Der Kanal kann so ausgebildet sein, dass sämtliche durch den Flansch führende Abgasrohre durch den Kanal führen oder, mit anderen Worten, die Abgasrohre werden von dem Kanal zumindest teilweise umgeben. Der Kanal kann sich über die gesamte Breite des Zylinderkopfes erstrecken. So kann jedes der Abgasrohre einfach mit dem Fluid, beispielsweise mit Sekundärluft, versorgt werden.

Die Öffnung im Abgasrohr ist beispielsweise durch einen seitlichen Schlitz gebildet.

Das oder die Abgasrohre können durch den Flansch hindurchtreten.

Weitere Merkmale und Vorteile der Erfindung ergeben sich aus der nachfolgenden Beschreibung eines Ausführungsbeispiels in Verbindung mit den beiliegenden Zeichnungen. In diesen zeigen:
- Figur 1 eine schematische perspektivische Ansicht eines erfindungsgemäßen Abgaskrümmers;
- Figur 2 eine schematische Schnittansicht eines Details des Abgaskrümmers in Figur 1; und
- Figur 3 eine weitere schematische perspektivische Ansicht des erfindungsgemäßen Abgaskrümmers.

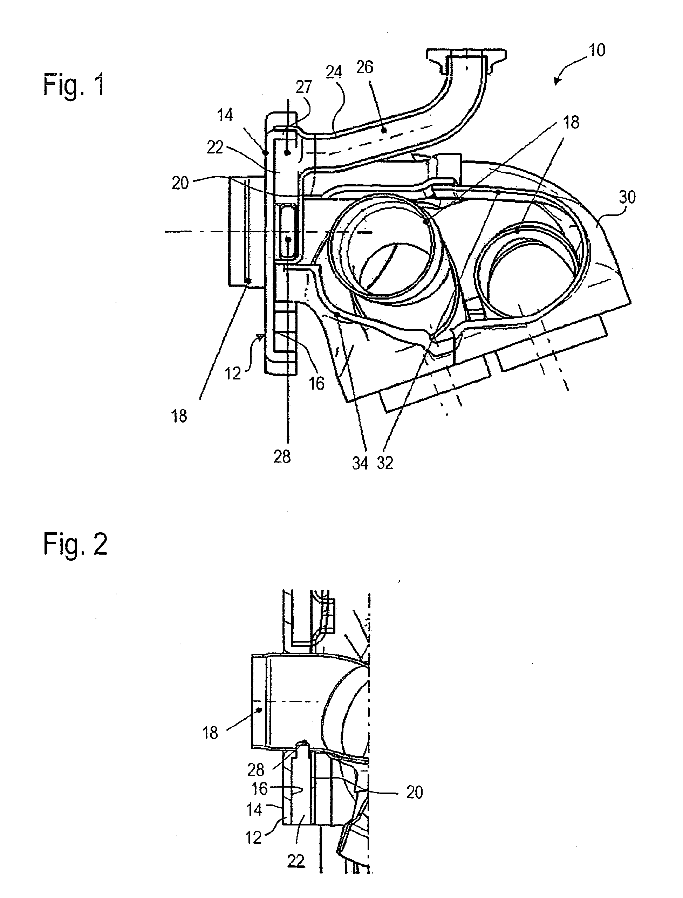

Fig. 1 zeigt einen Abgaskrümmer 10 mit einem Flansch 12, der eine motorseitige Flanschfläche 14 und eine ebene, entgegengesetzte Flanschfläche 16 aufweist. Die Flanschfläche 14 liegt im montierten Zustand flach an einem Motorblock einer nicht gezeigten Verbrennungskraftmaschine an.

Der Flansch 14 weist mehrere nebeneinander liegende Öffnungen auf, in die mit den Auslässen im Motorblock fluchtende Abgasrohre 18 ragen. Im dargestellten Ausführungsbeispiel ragen die Rohre 18 durch den Flansch 12 hindurch.

Ein im Wesentlichen U-förmig gebogenes Blechbauteil 20 ist so am Flansch 12 angeordnet, dass die Schenkel des "U" zur Flanschfläche 16 gerichtet sind, während ein zwischen den Schenkeln liegender Steg beabstandet zur Flanschfläche 16 ausgerichtet ist. Auf diese Weise ist zwischen dem Blechbauteil 20 und der Flanschfläche 16 ein in etwa über die ganze Länge des Flansches 12 verlaufender Kanal 22 ausgebildet. Der Steg des "U" ist vorzugsweise eben und parallel zur Flanschfläche 16 verlaufend ausgeführt.

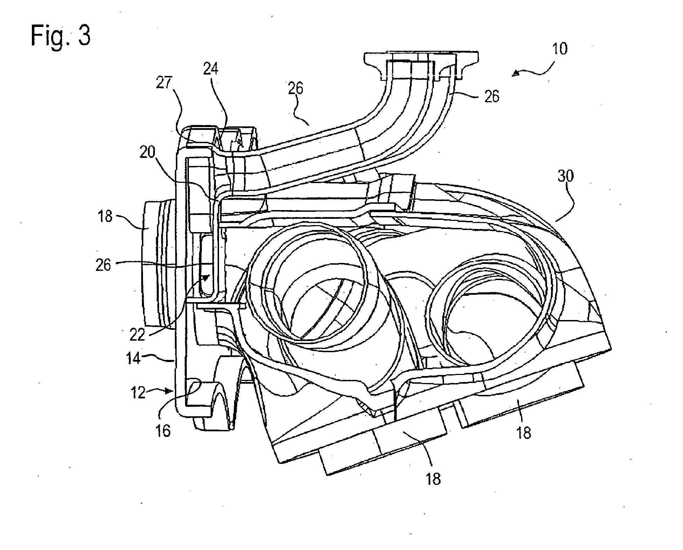

Auf der der Flanschfläche 16 abgewandten Seite ist im Blechbauteil 20 ein Ansatz 24 zum Anschluss einer Fluidleitung 26 ausgebildet, der hier in den in den Figuren 1 und 3 oberen Schenkel übergeht. Die Fluidleitung 26 mündet also auf der dem Motorblock abgewandten Seite in den Kanal 22. Über diese Fluidleitung 26 wird ein geeignetes Fluid, beispielsweise Sekundärluft, in die Abgasrohre 18 eingebracht. Je nach Anwendungszweck kann auch ein anderes gasförmiges oder flüssiges Fluid eingeleitet werden.

Im gezeigten Beispiel sind zwei Fluidleitungen 26 vorgesehen, die parallel zueinander versetzt in den Kanal 22 münden (siehe Figur 3).

Der Flansch 14 hat einen umgebogenen Rand 27, der von der Flanschfläche 16 absteht und im montierten Zustand vom Motorblock weg weist. Das Blechbauteil 20 übergreift am mit seinem in Figur 3 oberen Schenkel den Rand 27 und ist an diesem befestigt, zum Beispiel durch Schweißen. Der andere Schenkel ist beispielsweise an der Flanschfläche 16 mit dem Flansch 12 verschweißt.

Da der Motorblock im Bereich des Zylinderkopfs gekühlt ist, treten im Bereich des Flansches 12 und der Flanschfläche 16 nur mäßige Temperaturschwankungen auf, sodass sich auch unterschiedliche thermische Ausdehnungskoeffizienten der einzelnen Bauteile bei einer Befestigung in diesem Bereich nicht störend auswirken.

Um die Sekundärluft in das oder die Abgasrohre 18 einzubringen, weist dieses bzw. weisen diese je eine Öffnung 28 in Form zum Beispiel eines seitlichen Schlitzes auf, der vollständig im Kanal 22 liegt, sodass eine direkte Strömungsverbindung zwischen dem Inneren des Abgasrohres 18 und dem Kanal 22 gebildet ist.

Durch die Fluidleitung 26 einströmende Luft wird über den Kanal 22 durch die Öffnungen 28 in die Abgasrohre 18 und damit in das Abgassystem der Verbrennungskraftmaschine eingeleitet. Jedes der so zu versorgenden Abgasrohre 18 weist dementsprechend eine oder mehrere Öffnungen 28 auf.

Im gezeigten Bespiel sind die Abgasrohre 18 von einer mehrteiligen Außenschale 30 zur Bildung einer Luftspaltisolierung umgeben. Die Außenschale 30 mit der Ober- und der Unterschale 32, 34, die sich zueinander verschieblich überlappen, übergreift auf einer Seite des Kanals 22 (in Figur 3 unten) das Blechbauteil 20. An der anderen Seite des Kanals 22 endet die Außenschale 30 hingegen stumpf angesetzt am ebenen Steg des Blechbauteils 20.

## Patentansprüche

1. Abgaskrümmer für eine Verbrennungskraftmaschine, mit
wenigstens einem Abgasrohr (18), wobei das Abgasrohr (18) von einer Außenschale (30) einer Luftspaltisolierung umgeben ist, und mit
einem Flansch (12), der an einem Motorblock der Verbrennungskraftmaschine befestigbar ist,
wobei an dem Flansch (12) auf der dem Motorblock abgewandten Seite ein mit einer Fluidleitung (26) verbundener Kanal (22) vorgesehen ist,
der über eine seitliche Öffnung (28) im Abgasrohr (18) mit dem Inneren des Abgasrohrs (18) in Strömungsverbindung steht,
wobei die Fluidleitung (26) auf der dem Motorblock abgewandten Seite des Flansches (12) in den Kanal (22) mündet, und
ein den Kanal (22) bildendes Blechbauteil (20) innerhalb der Außenschale (30) angeordnet ist.

2. Abgaskrümmer nach Anspruch 1, **dadurch gekennzeichnet, dass** sich der Kanal (22) entlang einer Flanschfläche erstreckt, die entgegengesetzt zu derjenigen Flanschfläche (16) liegt, welche am Motorblock anliegt.

3. Abgaskrümmer nach Anspruch 2, **dadurch gekennzeichnet, dass** das den Kanal (22) bildende Blechbauteil (20) ein im Wesentlichen U-förmiges Querschnittsprofil aufweist.

4. Abgaskrümmer nach einem der Ansprüche 2 und 3, **dadurch gekennzeichnet, dass** das den Kanal (22) bildende Blechbauteil (20) einen Ansatz (24) zum Anschluss an die Fluidleitung (26) aufweist.

5. Abgaskrümmer nach einem der vorhergehenden Ansprüche, **dadurch gekennzeichnet, dass** der Kanal (22) so ausgebildet ist, dass sämtliche durch den Flansch (12) führenden Abgasrohre (18) durch den Kanal (22) führen.

6. Abgaskrümmer nach einem der vorhergehenden Ansprüche, **dadurch gekennzeichnet, dass** die Öffnung (28) im Abgasrohr (18) durch einen seitlichen Schlitz gebildet ist.

7. Abgaskrümmer nach einem der vorhergehenden Ansprüche, **dadurch gekennzeichnet, dass** das wenigstens eine Abgasrohr (18) durch den Flansch (12) in Richtung Motorblock hindurchtritt.

## Claims

1. An exhaust manifold for an internal combustion engine, comprising
at least one exhaust pipe (18), wherein the exhaust pipe (18) is surrounded by an outer shell (30) of an air gap insulating system, and also comprising
a flange (12) for fastening to an engine block of the engine,
wherein on the side remote from the engine block a duct (22) connected to a fluid pipe (26) is provided on the flange (12), and
is connected for flow purposes to the interior of the exhaust pipe (18) through a side opening (28) in the pipe (18),
wherein the fluid pipe (26) opens into the duct (22) on the side of the flange (12) remote from the engine block, and
a sheet-metal component (20) forming the duct (22) is disposed inside the outer shell (30).

2. An exhaust manifold according to claim 1, **characterised in that** the duct (22) extends along a flange surface opposite the flange surface (16) adjoining the engine block.

3. An exhaust manifold according to claim 2, **characterised in that** the sheet metal component (20) forming the duct (22) has a substantially U-shaped cross-section.

4. An exhaust manifold according to claim 2 and 3, **characterised in that** the sheet metal component (20) forming the duct (22) has an attachment (24) for connecting to the fluid pipe (26).

5. An exhaust manifold according to any of the preceding claims, **characterised in that** the duct (22) is constructed so that all exhaust pipes (18) leading through the flange (12) lead through the duct (22).

6. An exhaust manifold according to any of the preceding claims, **characterised in that** the opening (28) in the exhaust pipe (18) is in the form of a lateral slot.

7. An exhaust manifold according to any of the preceding claims, **characterised in that** the at least one exhaust pipe (18) extends through the flange (12) in the direction towards the engine block.

## Revendications

1. Collecteur de gaz d'échappement de moteur à combustion interne comprenant :
- au moins une conduite de gaz d'échappement (18), cette conduite de gaz d'échappement (18) étant entourée par une coque extérieure (30) avec une isolation par un intervalle d'air, et
- une bride (12) fixée au bloc du moteur à combustion interne,
le côté de la bride (12) à l'opposé du bloc-moteur ayant un canal (22) relié à une conduite de fluide (26),
ce canal communiquant par une liaison fluidique par une ouverture latérale (28) de la conduite des gaz d'échappement (18) avec l'intérieur de la conduite des gaz d'échappement (18),
- la conduite de fluide (26) débouchant dans le canal (22) sur le côté de la bride (12) à l'opposé du bloc-moteur, et
- une pièce en tôle (20) formant le canal (22) est à l'intérieur de la coque extérieure (30).

2. Collecteur de gaz d'échappement selon la revendication 1,
**caractérisé en ce que**
le canal (22) s'étend le long d'une surface de bride située à l'opposé de la surface de bride (16) appliquée contre le bloc-moteur.

3. Collecteur de gaz d'échappement selon la revendication 2,
**caractérisé en ce que**
la pièce de tôle (20) qui forme le canal (22) a un profil de section pratiquement en forme de U.

4. Collecteur de gaz d'échappement selon l'une des revendications 2 et 3, **caractérisé en ce que**
la pièce en tôle (20) qui forme le canal (22) a un prolongement (24) pour être relié à la conduite de fluide (26).

5. Collecteur de gaz d'échappement selon l'une quelconque des revendications précédentes,
**caractérisé en ce que**
le canal (22) est réalisé pour que toutes les conduites de gaz d'échappement (18) traversant la bride (12) passent dans le canal (22).

6. Collecteur de gaz d'échappement selon l'une quelconque des revendications précédentes,
**caractérisé en ce que**
l'ouverture (28) est réalisée dans la conduite des gaz d'échappement (18) par une fente latérale.

7. Collecteur de gaz d'échappement selon l'une quelconque des revendications précédentes,
**caractérisé en ce qu'**
au moins une conduite de gaz d'échappement (18) traverse la bride (12) en direction du bloc-moteur.
